# FASCICULE DE BREVET EUROPEEN

(11) **EP 1 894 760 B1**
(45) Date de publication et mention de la délivrance du brevet: **28.10.2009**
(21) Numéro de dépôt: 07115915.6
(22) Date de dépôt: 20.02.2002
(51) Int. Cl.: B60J 10/12

(54) **Vitrage avec un élément rigide incorporé dans une pièce en plastique surmoullée**
Verglasung mit einem starren Element, welches in einem angegossenen Kunststoffteil integriert ist
Glass pane with a rigid element incorporated in an overmoulded plastic part

(43) Date de publication de la demande: 05.03.2008
(62) Demande divisionnaire de: 02706879.0
(73) Titulaire: SAINT-GOBAIN GLASS FRANCE, 92400 Courbevoie (FR)
(72) Inventeur: Huchet, Gérard, 60350 Autreches (FR)
(74) Mandataire: Jamet, Vincent

(56) Documents cités:
- EP-A- 0 611 854
- EP-A- 0 771 684
- DE-C1- 19 923 725

## Description

L'invention se rapporte au domaine du vitrage et concerne un vitrage selon le préambule de la revendication 1, notamment pour le bâtiment ou pour véhicules automobiles ou de loisir, pourvus d'une pièce en matière plastique surmoulée sur l'élément vitré et qui incorpore un élément rigide.

Un vitrage de ce type est connu du document DE 199 23 725 C.

Un exemple particulier de vitrage de ce type dans le domaine des véhicules automobiles terrestres est donné par les toits vitrés, ouvrants ou fixes, occupant jusqu'à la quasi-totalité de la surface du pavillon. Ces vitrages comprennent un élément vitré, notamment en verre trempé, en verre feuilleté ou en plastique transparent, muni d'un encadrement en matière plastique surmoulé sur l'élément vitré, qui peut intégrer des éléments rigides de fixation au mécanisme d'entraînement du toit ouvrant. Afin de rigidifier l'élément vitré qui est soumis, lors de la circulation du véhicule, à des déformations dues à la pression liée à la vitesse de circulation, il est courant de doter le cadre surmoulé d'éléments de renfort sous la forme de barres métalliques, généralement en acier.

Dans une technique couramment mise en oeuvre, les barres de renforcement sont intégrées dans le cadre en matière plastique directement au cours de l'opération de surmoulage, en plaçant une ou des barres en insert avec l'élément vitré dans le moule de fabrication, puis en injectant la matière plastique de manière à incorporer le ou les inserts.

Avec les températures d'injection des matières thermoplastiques, ou la chaleur dégagée par la polymérisation d'un polyuréthane bicomposant selon un procédé RIM (Reaction Injection Moulding), qui sont des matériaux et procédés couramment employés à cet effet, cette technique présente l'inconvénient d'entraîner des déformations des éléments métalliques de renforcement d'abord à chaud par dilatation dans le moule, puis en sortie du moule par rétractation à froid, lesquelles imposent à l'élément vitré des contraintes et des déformations qui peuvent être inadmissibles pour le montage dans la carrosserie d'un point de vue mécanique et/ou esthétique.

Pour compenser ces déformations, on peut faire suivre la fabrication d'une étape de reconformation du vitrage par compression, mais cela entraîne une déformation du composite moulé, laquelle peut nuire à la liaison aux différentes interfaces et donc à l'intégrité du vitrage.

Un problème similaire de dilatation peut également se produire lorsque le véhicule est exposé à la chaleur de façon prolongée, notamment quand il stationne longuement en plein soleil. L'alternance de cycles échauffement/refroidissement tend alors progressivement à modifier inévitablement le galbe du vitrage, ce qui nuit à la ligne du véhicule.

La présente invention a pour but d'obvier aux inconvénients précités.

A cet égard l'invention a pour objet un vitrage selon la revendication 1.

En sélectionnant pour les éléments rigides selon l'invention des matériaux ayant un coefficient de dilatation linéaire proche de celui de l'élément vitré, on évite l'apparition de contraintes de dilatation différentielle dans l'ensemble constitué par l'élément vitré, la matière plastique et le(s) élément(s) rigide(s). Par conséquent, la conception et la fabrication du vitrage sont simplifiées, puisqu'il n'est plus nécessaire de pratiquer d'étape supplémentaire de conformation du vitrage.

En outre, la fabrication est globalement plus fiable, car les dimensions finales du vitrage sont plus proches de la médiane de l'intervalle de tolérances autorisé, qu'on ne le serait avec un élément métallique.

Dans le cadre de la présente invention, on désigne par élément vitré non seulement des éléments verriers constitués d'une ou plusieurs feuilles de verre liées entre elles le cas échéant par des feuilles intercalaires adhésives, mais aussi des éléments transparents ou translucides en polycarbonate.

Le ou les éléments rigides présentent un coefficient de dilatation thermique linéaire différent d'au plus 10⁻⁶ °C⁻¹ de celui de l'élément vitré.

Conformément à une réalisation particulière de l'invention, ce coefficient de dilatation thermique linéaire est de l'ordre de 8 à 10 x 10⁻⁶ °C⁻¹.

Ainsi, l'invention s'applique entre autres à l'intégration à un vitrage fixe d'un support de fixation, d'un support de mécanisme de fermeture, ainsi qu'à l'intégration à un vitrage mobile des moyens de guidages ou supports de moyens de guidage du vitrage. L'invention permet aussi l'intégration d'un support de conducteurs électrique ou de capteurs électriques, sans crainte de court-circuit, toujours possible avec un élément support métallique.

L'invention s'applique également à l'adjonction d'éléments de renfort à tous types de vitrages, notamment ouvrants tels que des toits vitrés ou des lunettes arrière ouvrantes en verre trempé ou feuilleté pour des véhicules automobiles, ou non ouvrants tels que des pavillons de toit vitrés collés sur la carrosserie d'un véhicule dont l'envergure demande généralement un renforcement notamment dans la partie centrale. Le ou les éléments rigides constituent alors une poutre longitudinale ou un arceau transversal de renforcement, en association avec une matière plastique surmoulée dans laquelle ils sont incorporés.

Selon encore une autre variante de l'invention, celle-ci s'applique notamment à des toits vitrés ou des lunettes arrière ouvrantes en verre, feuilleté, ou en verre non durci, ou encore en plastique, pour des véhicules automobiles ou des applications relevant du bâtiment.

Bien entendu, cette variante peut être aussi appliquée à des substrats en verre trempé, durci.

Ces différents substrats verriers ou en polycarbonate sont pourvus sur l'une de leur face ou sont associés, à au moins un dispositif électrochimique, notamment un système électrocommandable à propriétés optiques et/ou énergétiques variables, ce dispositif électrochimique, communément appelés dispositif électrochrome, étant du type de ceux décrits dans WO 00/71777 ou dans WO 00/57243 par exemple appartenant au même demandeur.

L'utilisation de tel vitrage ou substrat est avantageuse pour faire partie de vitrages électrochromes, pour bâtiment notamment des vitrages extérieurs ou de cloison interne ou de porte vitrée ou de toitures ou pour des moyens de locomotion du type train, avion (hublot), voiture (toit, lunette..).

L'invention peut aussi s'appliquer à l'intégration d'un élément de renfort dans un accessoire surmoulé, notamment un béquet attaché à la lunette arrière d'un véhicule.

Les vitrages équipés selon l'invention peuvent aussi bien être des vitrages de bâtiment, des vitrages pour véhicules terrestres automobiles ou tractés tels que des caravanes, ainsi que pour différents véhicules de loisir, notamment bateaux...

L'adjonction des éléments rigides selon l'invention peut avantageusement être réalisée au cours de l'opération de moulage de la pièce surmoulée.

D'autres détails et caractéristiques de l'invention apparaîtront de la description détaillée d'un mode exemplaire de réalisation qui va suivre, faite en regard des dessins annexés sur lesquels :
- la figure 1 représente une vue en perspective d'un vitrage selon l'invention ;
- les figures 2 et 3 représentent des vues en coupe du vitrage de la figure 1 respectivement suivant les axes II-II et III-III.

On précise que par un souci de clarté les différents éléments des objets représentés ne sont pas nécessairement reproduits à l'échelle.

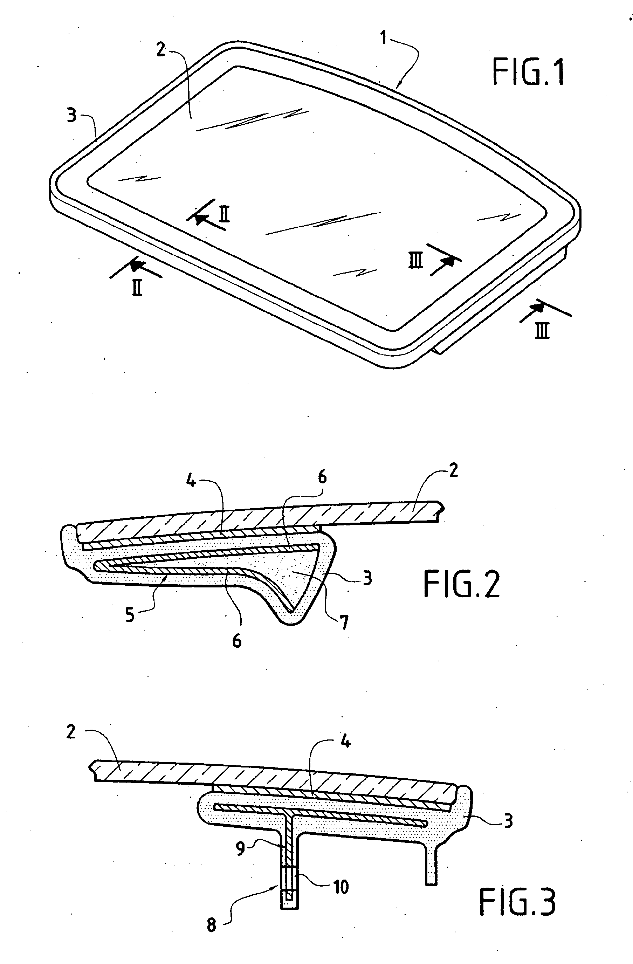

Le vitrage de la figure 1 est un toit ouvrant vitré 1, qui comprend un élément verrier 2-, notamment en verre trempé, pourvu d'un cadre surmoulé 3 en toute matière plastique adaptée, notamment en polyuréthanne.

Le cadre 3 est déposé sur une couche 4 d'émail opaque à la périphérie de l'élément verrier, et dont la fonction est de cacher à la vue depuis l'extérieur les équipements liés au vitrage.

Le cadre 3 fait ici tout le tour de l'élément verrier 2, mais il s'entend qu'il peut, suivant les besoins, ne s'étendre que sur une partie de la périphérie de ce dernier.

Le cadre 3 est en contact avec le chant de l'élément verrier et la face de l'élément verrier qui sera tournée vers l'intérieur du véhicule. Cela permet une disposition du toit ouvrant 1 en affleurement avec la carrosserie environnante.

En variante, le cadre 3 pourrait n'être en contact qu'avec la face intérieure de l'élément verrier 2 ou bien être placé à cheval sur le bord de l'élément verrier 2 en contact avec les deux faces intérieure et extérieure de l'élément verrier 2.

Sur la figure 2, on voit que le cadre 3 est renforcé le long d'un grand côté par un élément de renfort 5 qui est incorporé dans la matière 3 du cadre.

L'élément de renfort est en métal.

Sur la figure 3, on voit qu'un autre élément rigide 8 est intégré au cadre 3 le long d'un petit côté. Cet élément 8 sert d'une part à renforcer le vitrage et d'autre part à la fixation d'un mécanisme d'entraînement du toit, non représenté.

L'élément 8 est de manière analogue à l'élément 5 en métal.

Un trou 10 non taraudé est ménagé dans une aile de l'élément 8 pour recevoir une partie de fixation du mécanisme d'entraînement du toit 1.

Les éléments rigides 5,8 peuvent être intégrés au cadre 3 à l'occasion du surmoulage du cadre 3 sur l'élément verrier 2, en les plaçant en inserts à l'intérieur du moule, puis en injectant la matière plastique du cadre 3.

Au cours de cette opération de moulage, les éléments rigides insérés dans le moule subissent à la température de moulage une dilatation thermique du même ordre que l'élément verrier 2, de sorte qu'il n'apparaît pas au refroidissement de contrainte de dilatation différentielle.

L'invention, qui vient d'être décrite dans le cas particulier d'un vitrage mobile pour véhicule automobile, n'est nullement limitée à ce mode de réalisation, et englobe toute une palette de variantes, en ce qui concerne notamment les configurations des éléments du vitrage et les systèmes de montage du vitrage.

## Revendications

1. Vitrage (1) comprenant un élément vitré choisi parmi un élément verrier (2) constitué d'une ou de plusieurs feuilles de verres liées entre elles le cas échéant par des feuilles intercalaires adhésives ou un élément transparent ou translucide en polycarbonate, avec une pièce (3) en matière plastique surmoulée sur l'élément vitré et au moins un élément rigide (5,8), dans lequel le (ou les) élément(s) rigide(s) (5,8) est (ou sont) incorporé(s) dans la pièce (3) en matière plastique surmoulée, **caractérisé en ce que** le ou les éléments rigides (5,8) présentent un coefficient de dilatation thermique linéaire différant d'au plus 10⁻⁶ °C⁻¹ de celui de l'élément vitré **et en ce que** le (ou les) élément(s) rigide(s) (5,8) est (ou sont) en métal.

2. Vitrage selon la revendication 1, **caractérisé en ce que** le ou les éléments rigides (5,8) présentent un coefficient de dilatation thermique linéaire de l'ordre de 8 à 10 x 10⁻⁶°C⁻¹.

3. Vitrage selon l'une quelconque des revendications précédentes, **caractérisé en ce que** ledit élément rigide (8) est un support de fixation d'éléments divers, au moyen notamment d'un trou (10) non taraudé ménagé dans l'élément rigide.

4. Vitrage selon l'une quelconque des revendications précédentes, **caractérisé en ce que** ledit élément rigide (5) est un élément de renforcement.

5. Vitrage selon l'une quelconque des revendications précédentes, **caractérisé en ce qu'**il incorpore un dispositif électrochimique électrommandable à propriétés optiques et/ou énergétiques variables.

6. Utilisation d'un vitrage selon la revendication 5 pour faire partie de vitrages électrochromes.

## Claims

1. Glazing (1) comprising a glazed element chosen from a glass element (2) consisting of one or more sheets of glass bonded together, as appropriate, by adhesive interlayers and from a transparent or translucent element made of polycarbonate, with a rigid element (3) overmolded on the glazed element and at least one rigid element (5, 8), in which a or the rigid element (s) (5, 8) is (or are) incorporated into the overmolded plastic part (3), **characterized in that** the rigid element(s) (5, 8) has (or have) a linear thermal expansion coefficient differing by 10⁻⁶°C⁻¹ at most from that of the glazed element **and in that** the rigid element(s) (5, 8) is (or are) in metal.

2. The glazing as claimed in claim 1, **characterized in that** the rigid elements (5, 8) have a linear thermal expansion coefficient of the order of 8 to 10 × 10⁻⁶°C⁻¹.

3. The glazing as claimed in any of the preceding claims, **characterized in that** said rigid element (8) is a support for the attachment of various elements, particularly by means of an untapped hole (10) made in the rigid element.

4. The glazing as claimed in any of the preceding claims, **characterized in that** said rigid element (5) is a reinforcing element.

5. The glazing as claimed in any of the preceding claims, **characterized in that** it incorporates an electrically operable electrochemical device, with variable optical and/or energy properties.

6. The use of the glazing as claimed in claim 5 to form part of electrochromic windows, particularly for buildings or for locomotive means of the train, airplane or automobile type.

## Patentansprüche

1. Verglasung (1), die ein Verglasungselement umfasst, das aus einem Glaselement (2) ausgewählt ist, das von einer oder mehreren Glasscheiben, die gegebenenfalls untereinander durch haftfähige Zwischenfolien verbunden sind, oder einem transparenten bzw. durchscheinenden Polycarbonatelement gebildet ist, mit einem auf das Verglasungselement aufgeformten Kunststoffteil (3) und mindestens einem starren Element (5, 8), wobei das/die starre/n Element/e (5, 8) in das aufgeformte Kunststoffteil (3) eingebaut ist/sind, **dadurch gekennzeichnet, dass** das/die starre/n Element/e (5, 8) einen linearen Wärmeausdehnungskoeffizienten aufweist/aufweisen, der sich um höchstens 10⁻⁶ °C⁻¹ von dem des Verglasungselements unterscheidet, **und dass** das/die starre/n Element/e (5, 8) aus Metall besteht/bestehen.

2. Verglasung nach Anspruch 1, **dadurch gekennzeichnet, dass** das/die starre/n Element/e (5, 8) einen linearen Wärmeausdehnungskoeffizienten von etwa 8 bis 10·10⁻⁶ °C⁻¹ aufweist/aufweisen.

3. Verglasung nach einem der vorhergehenden Ansprüche, **dadurch gekennzeichnet, dass** das starre Element (8) ein Träger für die Befestigung verschiedener Elemente mittels insbesondere eine nicht mit Innengewinde versehenen Lochs (10), das in dem starren Element angebracht ist, ist.

4. Verglasung nach einem der vorhergehenden Ansprüche, **dadurch gekennzeichnet, dass** das starre Element (5) ein Verstärkungselement ist.

5. Verglasung nach einem der vorhergehenden Ansprüche, **dadurch gekennzeichnet, dass** in sie eine elektrisch regelbare elektrochemische Vorrichtung mit veränderbaren optischen und/oder energetischen Eigenschaften eingebaut ist.

6. Verwendung einer Verglasung nach Anspruch 5 als Bestandteil elektrochromer Verglasungen.
